# EUROPEAN PATENT APPLICATION

(11) **EP 4 714 889 A1**
(43) Date of publication of application: **25.03.2026**
(21) Application number: 24201353.0
(22) Date of filing: 19.09.2024
(51) Int. Cl.: B66C 13/48

(54) **CRANE ARRANGEMENT INCLUDING A PRE-OPERATION PLANNING MODULE**

(71) Applicant: Hiab AB, 215 32 Malmö (SE)
(72) Inventor: NÄSLUND, David, SE-187 73 Täby (SE); BERGLUND, Mattias, SE-824 40 Hudiksvall (SE)
(74) Representative: Bjerkén Hynell KB

(57) **Abstract**

Crane arrangement (2) for a vehicle (4), comprising a crane base (5) arranged to be mounted to the vehicle (4); a movable arm (6) connected to the crane base, the movable arm comprising a plurality of crane booms; a set of stabiliser legs (7) connected to the crane base (5); a crane manoeuvring unit (10) arranged to generate crane operation commands (12), based on received input (14) by an operator of the crane arrangement (2), and a crane controller (24) arranged to operate in a crane operation mode wherein it is configured to monitor and control movements of the movable arm (6) in response to operation commands (12) and based on a configuration of the set of stabiliser legs (7). The crane controller (24) is arranged to operate in a pre-operation mode, and that said crane arrangement (2) also comprises a pre-operation planning module (16), wherein the crane controller (24) is configured to communicate with said pre-operation planning module (16). The pre-operation planning module (16) is configured to determine a set of planning parameter values (18) related to a crane operation planned to be performed, and to determine a straight-line working distance (22), between said crane base (5) and a planned load position (26), and to communicate said determined set of planning parameter values (18), including said distance signal (28), to said crane controller (24). The crane controller (24) is configured to calculate a working condition (30), such as a maximum load or a reach for a defined load, of the movable arm (6) based upon said set of planning parameter values (18), and further to communicate said calculated working condition (30) to the pre-operation planning module (16) for review by the operator.

## Description

### Technical field

The present invention relates to a crane arrangement, and to a method of using the crane arrangement, to be used on vehicles, specifically to a crane arrangement designed to enhance the safety, efficiency, and precision of crane operations by incorporating a pre-operation planning module and dynamic working condition calculations.

### Background

The invention is directed to loader cranes and the planning that the crane operator needs to perform before operating the crane. A key aspect in planning the operation of a truck mounted crane is to know if the crane would be able to lift the load from where it is located in relation to the truck and the target position. Other important features could be to plan for settings of the stabilizer legs to be able to handle the lifting of the load in a safe manner, without getting into situations during the actual lifting when the truck and crane does not have enough stability, etc.

In the following, some documents will be identified and briefly discussed, that disclose related technology.

EP3514101A1 discloses a crane consisting of a moving arm with extensions, a stabilizing mechanism, and a means to control the crane. The crane operates based on respective manual control means in the form of pushbuttons or control levers (i.e., normal mode of operation). Furthermore, the crane is configured to perform a calculation of the maximum load, performed before the loading operation, to indicate the maximum load that can be lifted. This calculation is based on the arm of the crane and measurements of the specific configuration of the stabilizing mechanism of the crane. Additionally, the crane is equipped with a display means to show the calculated maximum load.

US2017260029A1 discloses a crane consisting of a base, a moving arm with a boom, a support member, and a crane controller. The crane operates based on commands from a manoeuvring unit. Furthermore, the crane is configured to perform a calculation of bearing load volume. The configuration of the boom and the superstructure are determined to ascertain a bearing load graph. The load capacity is calculated for an occurring state based on sensors provided on the support members.

CN113353823A discloses a crane comprising a base, booms, crane legs, and a controller. The crane is configured to determine the lifting loads corresponding to the boom length and characteristics of the supporting legs. By considering the current state of the crane's supporting legs and other factors, the crane determines the optimal suspension arm working amplitude from another performance table for various rotation angles. EP4238926A1 discloses a crane comprising a frame, crane booms, support legs, and a crane controller. The crane is configured to determine whether one or more predetermined load-limiting operations are being fulfilled in order to perform lifting moments. The frame assembly includes a mechanical stress parameter for load-limiting conditions. This mechanical stress parameter is a factor dependent on the support legs.

Cranes mounted on vehicles are widely used in various industries for lifting and moving heavy loads. Traditional crane systems often rely on manual calculations and operator experience to determine the appropriate configurations and safe operational limits. However, this process can be error-prone and time-consuming, leading to potential safety hazards and operational inefficiencies. Some solutions have been presented in the above-discussed background art, but there is still room for improvements. The present invention addresses these challenges by providing a crane arrangement that assists in pre-operation planning and dynamically adjusts crane operations based on real-time data.

The object of the present invention is to achieve an improved crane arrangement, and a method of using the crane arrangement, that address the above issues, i.e. a crane arrangement provided with means that allows the operator to plan the load handling before starting a loading/unloading operation in a user-friendly way, and resulting in a more efficient and secure crane operation in comparison to presently used solutions.

### Summary

The above-mentioned objects are achieved by the present invention according to the independent claims.

Preferred embodiments are set forth in the dependent claims.

The invention provides a crane arrangement for a vehicle, which includes a crane base to be mounted on the vehicle, a movable arm with multiple crane booms, and a set of stabilizer legs attached to the crane base. The system is equipped with a crane manoeuvring unit, which generates crane operation commands based on input from the operator.

A key feature of the present invention is to include a crane controller that operates in two distinct modes: a crane operation mode and a pre-operation mode. The crane operation mode monitors and controls the crane's movements based on the received commands and the configuration of the stabilizer legs. The pre-operation mode, however, is specifically designed to work with a pre-operation planning module as it allows the operator to plan the load handling before starting the loading/unloading operation.

The pre-operation planning module is responsible for determining a set of planning parameter values related to a planned crane operation. This module also uses a distance measurement arrangement to calculate a straight-line working distance between the crane base and the planned load position, often being the position of a crane tip. The resulting planning parameter values, including the distance signal, are communicated to the crane controller, which then calculates a working condition, such as the maximum load or reach for the crane arm, based on these inputs. The calculated working condition is then communicated back to the pre-operation planning module where it is available to be reviewed by the operator before the operation may be initiated.

The crane arrangement according to the present invention provides improvements of crane operations, particularly for vehicle-mounted cranes. This is achieved by providing a pre-operation planning module, coupled with dynamic working condition calculations, that provides operators with a powerful tool to plan, review, and execute crane operations, in a user-friendly way, with improved accuracy and safety, and that reduces the likelihood of human errors.

### Brief description of the drawings

Figure 1 is a schematic illustration of embodiments of a crane arrangement according to the present invention.
Figure 2 is a block diagram schematically illustrating an embodiment details of the crane arrangement according to the present invention.
Figure 3 is a block diagram schematically illustrating another embodiment of details of the crane arrangement according to the present invention.
Figure 4 is flow diagram of the method of using the crane arrangement according to the present invention.

### Detailed description

The crane arrangement, and the method of using the crane arrangement, will now be described in detail with references to the appended figures. Throughout the figures the same, or similar, items have the same reference signs. Moreover, the items and the figures are not necessarily to scale, emphasis instead being placed upon illustrating the principles of the invention.

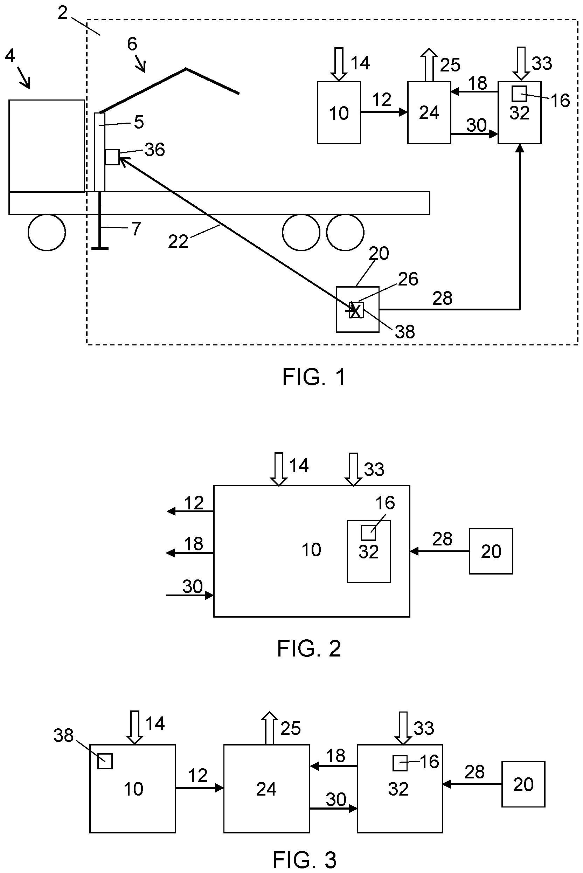

With references to figure 1 a crane arrangement 2 for a vehicle 4 is schematically illustrated.

The crane arrangement 2 comprises a crane base 5 arranged to be mounted to the vehicle 4, and providing the foundation for the crane; a movable arm 6 connected to the crane base, and comprising a plurality of crane booms allowing flexible movement and extension, and a crane tip, and a set of stabiliser legs 7 connected to the crane base 5, and/or to the vehicle chassis, to ensure stability during operation. The crane base 5 comprises a mount for the movable crane arm, e.g. a rotatable crane column, that enables slewing of the movable arm in relation to vehicle 4. A tool arranged for the specific load handling application, such as a grab for bricks, fork for pallets or hook and straps to secure a load, may further be attached to the crane tip and operated by the crane arrangement. The set of stabiliser legs 7 normally comprises one or two pairs of stabiliser legs, the set-up illustrated in figure 1, comprises one pair of stabilizer legs.

The crane arrangement further comprises a crane manoeuvring unit 10 arranged to generate crane operation commands 12, such as commands for movements of the movable arm, based on received input 14 by an operator of the crane arrangement 2, and a crane controller 24 arranged to operate in a crane operation mode wherein it is configured to monitor and control movements of the movable arm 6 in response to operation commands 12 received from the manoeuvring unit 10 and based on a configuration of the set of stabiliser legs 7. The crane controller 24 is configured to generate control signals 25 to control the movements of the movable arm, and preferably also to control the operation of a tool attached to a crane boom tip. The control signals 25 are conventionally applied to various actuators, e.g. hydraulic actuators, electro-hydraulic actuators, or electromechanical actuators, provided in relation to the movable arm. The crane controller is conventionally provided and mounted at the vehicle, and comprises all necessary processing, storing, communication capabilities required to perform its task.

The crane controller 24 is further arranged to operate in a pre-operation mode.

Thus, the crane controller 24 is configured to be operated in at least two modes:
A crane operation mode: The crane controller monitors and controls the movements of the movable arm 6 based on the received operation commands 12 and the configuration of the stabilizer legs 7.

A pre-operation mode: The crane controller communicates with a pre-operation planning module 16 to calculate and review the working conditions before the crane operation.

The operator may determine which mode to operate the crane controller, either by entering an input via the crane manoeuvring unit 10, and/or via a pre-operation planning module unit 32 which will be described below.

Thus, the crane arrangement 2 also comprises a pre-operation planning module 16, wherein the crane controller 24 is configured to communicate with the pre-operation planning module 16, by applying any applicable radio or optical communication technology, e.g. Bluetooth, IR, etc.

The pre-operation planning module 16 is configured to determine a set of planning parameter values 18 related to a crane operation planned to be performed, and to determine, by a distance measurement arrangement 20, a straight-line working distance 22, between the crane base 5 and a planned load position 26, which may be the position of the crane tip during operation, and to determine a distance signal 28 in dependence thereto.

The technical solution is based on providing a distance measurement arrangement 20 capable of continuously determining the working distance 22. Various distance measurement solutions exist. One such solution is implemented by providing at least two units and continuously measuring the distance between these units by applying radio time of flight technology, this may be based on a round trip time between the two units wherein one unit transmits a first signal and the other unit transmits another signal in response to receiving the first signal. Radio bands such as Ultra-wide band, Bluetooth or WiFi may be used. This technology provides that an accurate distance can be calculated, typically with a precision in range of one to ten centimetres. Alternatively, the distance measurement could be based on other technologies such as e.g. ultrasound or vision-based systems.

The pre-operation planning module 16 is further configured to communicate the determined set of planning parameter values 18, including the distance signal 28, to the crane controller 24.

The crane controller 24 is configured to calculate a working condition 30, such as a maximum load or a reach for a defined load, of the movable arm 6 based upon the set of planning parameter values 18.

The crane controller 24 is further configured to communicate the calculated working condition 30 to the pre-operation planning module 16 for review by the operator.

The pre-operation planning module 16 will enable the operator to test various planning parameters, e.g. the load weight, various configurations of the leg stabilizers, etc. and to move around the crane for testing how different working distances affects the working condition and, in real-time, receive constantly varying working conditions from the crane controller. The working condition includes information whether the planned parameter configuration is possible given the input planning parameter values, and the current working distance.

According to an embodiment, the pre-operation planning module 16 is a software application module, configured to be installed and executed on a pre-operation planning module unit 32 capable of receiving operator input 33.

According to another embodiment, the manoeuvring unit 10 comprises the pre-operation planning module unit 32, and the manoeuvring unit 10 comprises a user display for presenting the calculated working condition 30 for the operator to review. This embodiment is illustrated in figure 2.

In a further embodiment, the pre-operation planning module 16 is a software application module, configured to be installed and executed on a portable computing device, e.g. a smartphone, a laptop, or a tablet computer, i.e. the portable computing device then being the pre-operation planning module unit 32, and comprising a user display for presenting the calculated working condition 30 allowing for flexible operation and review for the operator.

According to still another embodiment, the distance measurement arrangement 20 comprises a first distance measurement unit 36 mounted at the crane base 5, and a second distance measurement unit 38 provided at the planned load position 26. In the figures, for sake of simplicity, the distance measurement arrangement 20 is shown as a separate box, that includes the functionality of measuring the working distance 22, despite that the first and second distance measurement units 36, 38 are shown, in figures 1 and 3, separated from the box 20.

In another embodiment, the second distance measurement unit 38 is arranged in the crane manoeuvring unit 10.

In an advantageous set-up, which is illustrated in figure 3, the manoeuvring unit 10 is provided with the second distance measurement unit 38, and is configured to communicate the distance signal 28 to the pre-operation planning module being installed and executed on a portable computing device, i.e. the pre-operation planning module unit 32, e.g. a smartphone, a laptop, or a tablet computer. In a typical use of the crane arrangement according to this embodiment, the operator moves around during the planning procedure carrying both the manoeuvring unit 10 and the pre-operation planning module unit 32, e.g. a smartphone, a laptop, or a tablet computer.

Particularly, the manoeuvring unit 10 and the pre-operation planning module unit 32 are provided with communication means in order to set up a wireless communication link between these units, e.g. via a mobile phone communication network or a near-field communication technology, e.g. Bluetooth.

According to another embodiment, the set of planning parameter values 18 comprising a set of planned load characteristics, and a planned configuration of the set of stabiliser legs 7, e.g. if two or four stabilizer legs should be used, if a present configuration of the set of stabiliser legs should be applied.

In another embodiment, the set of planning parameter values comprises a direction of the planned load position in relation to the crane base at the vehicle.

The direction of the planned load position 26 in relation to the crane base at the vehicle may be defined as one of a number of sectors, e.g. 4-48 sectors distributed around the vehicle with the centre at e.g. a slewing origin of the movable arm. The direction may be measured or estimated by having this functionality built into the sensor measurement technology of the distance measurement arrangement 20. By having several distance measurement units mounted to different positions on the vehicle and/or sides of the vehicle, the direction may be deduced from the respective distance signals.

In a further embodiment, the calculated working condition 30 is a maximum load for a crane tip at the planned load position being defined by the determined current working distance 22.

According to still another embodiment, the crane controller 24 is configured to calculate the working condition 30 at a predetermined calculation rate in order to continuously calculate, and communicate, a dynamically updated working condition 30 in response of varying working distances 22. This is applicable e.g. when the operator plans a loading/unloading procedure by walking around the vehicle, e.g. in order to determine a place to position goods to be unloaded.

In a further embodiment, the pre-operation planning module 16 is configured to receive an acceptance input from the operator if the calculated working condition is accepted by the operator, and then to communicate the acceptance to the crane controller 24. Upon receipt of the acceptance, the crane controller 24 is configured to be ready to perform the planned crane operation related to the accepted working condition 30.

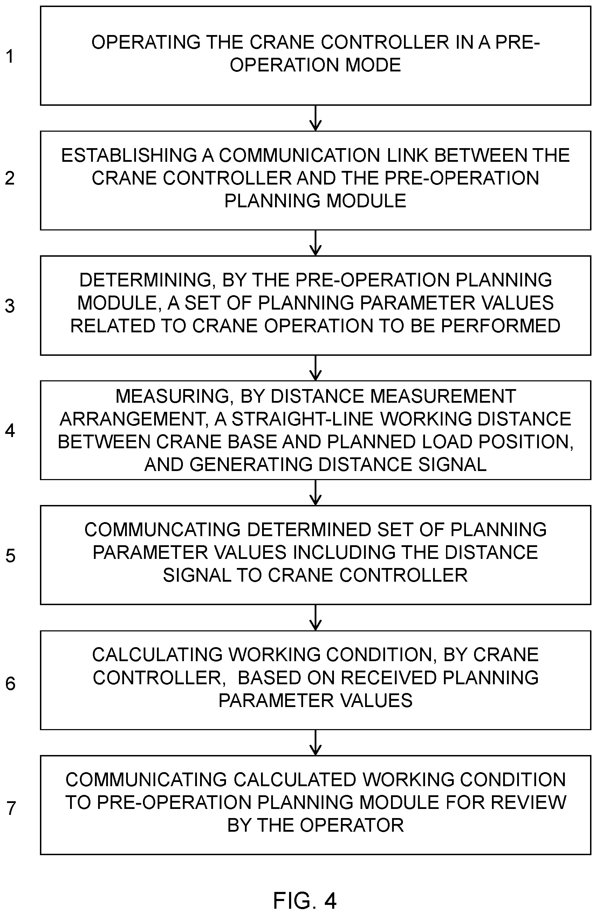

The present invention also relates to a method of using a crane arrangement as defined above. The crane arrangement, and different embodiments of the arrangement, have been described in detail above and it is herein referred to that description. The method will now be described with references to the flow diagram shown in figure 4.

Thus, the invention provides a method of using a crane arrangement that enhances the precision and safety of crane operations by integrating a pre-operation planning module, a distance measurement arrangement, and a crane controller. The method includes the following steps (steps 1-7 are included in the flow diagram of figure 4):

### 1. Pre-operation mode activation:

The crane controller is operated in a pre-operation mode to initiate the planning phase of the crane operation.

### 2. Establishing communication:

A communication link is established between the crane controller and the pre-operation planning module. This allows for the exchange of crucial operational data. In the case where the pre-operation planning module is part of the manoeuvring unit, this may take place when initiating the manoeuvring unit and crane arrangement communication.

### 3. Planning parameter determination:

The pre-operation planning module determines a set of planning parameter values related to the crane operation to be performed. These parameters may include factors such as load weight, environmental conditions, and operational constraints.

### 4. Distance measurement:

A distance measurement arrangement determines a straight-line working distance between the crane base, such as e.g. an attachment point for the moveable crane arm, like e.g. the crane column, and the planned load position. A distance signal is then generated based on this measurement.

### 5. Data communication:

The determined set of planning parameter values including the distance signal are communicated to the crane controller for further processing.

### 6. Working condition calculation:

The crane controller calculates a working condition, such as the maximum load or reach for a defined load, based on the received planning parameter values and the distance signal. This calculation considers both static and dynamic factors to ensure safe operation.

### 7. Review by operator:

The calculated working condition is communicated back to the pre-operation planning module for review by the operator. The operator can assess the feasibility and safety of the proposed operation based on this data.

In the following, some embodiments of the method are listed. These have the same technical features and advantages as for the corresponding features of the crane arrangement described above. Consequently, these technical features and advantages are not repeated or explained anew in order to avoid unnecessary repetition.

Steps 8 and 9 define embodiments of the method defined in steps 1-7.

### 8. Continuous updating:

In scenarios where the working distance varies, it is advantageous that the crane controller calculates the working condition at a predetermined rate, ensuring that the operator has access to a dynamically updated working condition throughout the operation. This continuous calculation allows for real-time adjustments to be made, maintaining optimal performance and safety.

### 9. Acceptance and execution:

Upon receiving an acceptance input from the operator, indicating that the calculated working condition is satisfactory, the acceptance is communicated to the crane controller. The crane controller may then proceed to execute the planned crane operation based on the accepted working condition in dependence of input from the operator.

The method according to the present invention begins by operating the crane controller in a pre-operation mode. This mode is specifically designed to facilitate the planning phase of crane operations, allowing for the determination and evaluation of various operational parameters before the actual lifting begins.

Once in pre-operation mode, the crane controller establishes a communication link with the pre-operation planning module. This module is responsible for determining a set of planning parameter values that are critical for the upcoming crane operation. These parameters may include the weight of the load to be lifted, the distance from the crane base to the load, and any environmental factors that could affect the operation.

Concurrently, a distance measurement arrangement, which may include laser rangefinders, ultrasonic sensors, or other suitable technologies, measures the straight-line working distance between the crane base and the planned load position. This distance is a key factor in calculating the crane's capacity to safely lift and move the load.

The distance measurement arrangement generates a distance signal, which is then communicated to the crane controller along with the set of planning parameter values. Using this data, the crane controller calculates a working condition, such as the maximum load capacity or the optimal reach of the crane's movable arm for the given load and distance.

This calculated working condition is then sent back to the pre-operation planning module for the operator's review. The operator can evaluate the proposed operation based on the calculated data, ensuring that it meets safety and performance standards.

In situations where the working distance may change during the operation, the crane controller continuously recalculates the working condition at a predetermined rate. This ensures that any variations in distance are promptly accounted for, allowing for real-time adjustments to the crane's operation.

Finally, if the operator is satisfied with the calculated working condition, he/she provides an acceptance input to the pre-operation planning module. This acceptance is communicated to the crane controller, which then may execute the planned crane operation in accordance with the accepted working condition.

Below, further implementations of variations of the present invention will be described. The set of planning parameter values 18 may further comprise additional positions in a working area of the crane arrangement, determined by the distance measurement arrangement 20. Positions previously determined by the measurement arrangement 20 may hence be applied in the set of planning parameter values 18 to define a sequence of positions for the load, or the tip of the crane, in a planned working assignment. As an example, a position to pick up the load may be determined, another position for defining the target position where to unload may further be determined. Even additional positions to define the path of the load, or the tip of the crane arm, during a sequence from the pickup position to the target position may be determined and applied to the set of planning parameter values 18. This could e.g. be used to circumvent a tree or other obstacle in the working area when using an automatic or semi-automatic movement sequence to control the crane tip. In such an automatic or semi-automatic movement sequence to control the crane tip, the operator may control the speed of the movement of the tip from a first position to a second position but the crane controller determines which of the booms of the crane arrangement to move in order to achieve the wanted movement of the crane tip. This is an alternative to manual operation where the operator controls the movement of each boom of the crane arrangement with individual control commands.

The present invention is not limited to the above-described preferred embodiments. Various alternatives, and modifications may be used. Therefore, the above embodiments should not be taken as limiting the scope of the invention, which is defined by the appending claims.

## Claims

1. Crane arrangement (2) for a vehicle (4), the crane arrangement (2) comprising:
- a crane base (5) arranged to be mounted to the vehicle (4);
- a movable arm (6) connected to the crane base, the movable arm comprising a plurality of crane booms;
- a set of stabiliser legs (7) connected to the crane base (5);
- a crane manoeuvring unit (10) arranged to generate crane operation commands (12), such as commands for movements of the movable arm, based on received input (14) by an operator of the crane arrangement (2), and
- a crane controller (24) arranged to operate in a crane operation mode wherein it is configured to monitor and control movements of the movable arm (6) in response to operation commands (12) received from the manoeuvring unit (10) and based on a configuration of the set of stabiliser legs (7), **characterized in that** the crane controller (24) is further arranged to operate in a pre-operation mode, and that said crane arrangement (2) also comprises a pre-operation planning module (16), wherein the crane controller (24) is configured to communicate with said pre-operation planning module (16),
the pre-operation planning module (16) is configured to determine a set of planning parameter values (18) related to a crane operation planned to be performed, and wherein the set of planning parameter values (18) comprises a distance signal (28) representing a straight line working distance (22), between said crane base (5) and a planned load position (26) determined by a distance measurement arrangement (20), and to communicate said determined set of planning parameter values (18), to said crane controller (24), wherein the crane controller (24) is configured to calculate a working condition (30), such as a maximum load or a reach for a defined load, of the movable arm (6) based upon said set of planning parameter values (18) and further to communicate said calculated working condition (30) to the pre-operation planning module (16) for review by the operator.

2. Crane arrangement (2) according to claim 1, wherein the pre-operation planning module (16) is a software application module, configured to be installed and executed on a pre-operation planning module unit (32).

3. Crane arrangement (2) according to claim 2, wherein said manoeuvring unit (10) comprises the pre-operation planning module (32), and wherein said manoeuvring unit (10) comprises a user display for presenting the calculated working condition (30) for the operator to review.

4. Crane arrangement (2) according to claim 1, wherein the pre-operation planning module (16) is a software application module, configured to be installed and executed on a portable computing device (32), e.g. a smartphone, a laptop, or a tablet computer, and comprising a user display for presenting the calculated working condition (30) for the operator to review.

5. Crane arrangement (2) according to any of claims 1-4, wherein said distance measurement arrangement (20) comprises a first distance measurement unit (36) mounted at said crane base (5), and a second distance measurement unit (38) provided at said planned load position (26).

6. Crane arrangement (2) according to claim 5, wherein said second distance measurement unit (38) is arranged in said crane manoeuvring unit (10).

7. Crane arrangement (2) according to any of claims 1-6, wherein said set of planning parameter values (18) comprising a set of planned load characteristics, and a planned configuration of the set of stabiliser legs (7).

8. Crane arrangement (2) according to any of claims 1-7, wherein the calculated working condition (30) is a maximum load for a crane tip at the planned load position being defined by said determined current working distance (22).

9. Crane arrangement (2) according to any of claims 1-8, wherein said crane controller (24) is configured to calculate said working condition (30) at a predetermined calculation rate in order to continuously calculate, and communicate a dynamically updated working condition (30) in response of varying working distances (22).

10. Crane arrangement (2) according to any of claims 1-9, wherein said pre-operation planning module (16) is configured to receive an acceptance input from the operator if said calculated working condition is accepted by the operator, and then to communicate said acceptance to said crane controller (24), and wherein said crane controller (24) is configured to perform said planned crane operation related to the accepted working condition (30).

11. Crane arrangement (2) according to any of claims 1-10, wherein the set of planning parameter values comprises a direction of the planned load position (26) in relation to the crane base at the vehicle.

12. A method of using a crane arrangement according to any of claims 1-11, **characterized in that** the method comprises:
- operating the crane controller (24) in a pre-operation mode;
- establishing communication between the crane controller and the pre-operation planning module (16);
- determining, by the pre-operation planning module (16), a set of planning parameter values (18) related to a crane operation planned to be performed;
- determining, by a distance measurement arrangement (20), a straight line working distance (22), between said crane base (5) and a planned load position (26), and determining a distance signal (28) in dependence thereto;
- communicating said determined set of planning parameter values (18), including said distance signal (28), to said crane controller (24);
- calculating, by the crane controller (24), a working condition (30), such as a maximum load or a reach for a defined load, of the movable arm (6) based upon said set of planning parameter values (18), and
- communicating said calculated working condition (30) to the pre-operation planning module (16) for review by the operator.

13. The method according to claim 12, comprising calculating, by the crane controller (24), said working condition (30) at a predetermined calculation rate in order to continuously calculate, and communicate a dynamically updated working condition (30) in response of varying working distances (22).

14. The method according to claim 10 or 11, comprising receiving, by the pre-operation planning module (16), an acceptance input from the operator if said calculated working condition is accepted by the operator, and then communicating said acceptance to said crane controller (24), and performing, by the crane controller (24), said planned crane operation related to the accepted working condition (30).
